# EUROPEAN PATENT SPECIFICATION

(11) **EP 0 486 154 B1**
(45) Date of publication and mention of the grant of the patent: **30.07.1997**
(21) Application number: 91309317.5
(22) Date of filing: 10.10.1991
(51) Int. Cl.: G06F 12/10

(54) **Method of operating a virtual memory system**
Verfahren zum Betreiben einer virtuellen Speicheranordnung
Procédé à conduire un système de mémoire virtuelle

(30) Priority: 13.11.1990 GB 9024692
(43) Date of publication of application: 20.05.1992
(73) Proprietor: INTERNATIONAL COMPUTERS LIMITED, Putney, London, SW15 1SW (GB)
(72) Inventor: Allt, George, Oldham OL1 2QS (GB); Eaton, John Richard, Salford M6 8EY (GB)
(74) Representative: Guyatt, Derek Charles

(56) References cited:
- EP-A- 0 243 724
- EP-A- 0 310 444
- THE 13TH ANNUAL INTERNATIONAL SYMPOSIUM ON COMPUTER ARCHITECTURE, PROCEEDINGS 2 June 1986, WASHINGTON, IEEE COMP SOC PRESS; US pages 358 - 365; WOOD ET AL: 'An In-Cache Address Translation Mechanism'

## Description

### Background to the invention

This invention relates to virtual memory systems. In such a system, before a data item can be accessed from the main memory of the system, its virtual address must first be translated into a real or physical address. The translation process generally involves look up translation tables, such as page and segment tables, held in the main memory. These translation tables exist only in the real address space of the system; i.e. they can be addressed only by their real addresses, and do not have any virtual address.

In order to speed up the address translation process, it is known to use a small associatively addressed memory (sometimes referred to as the current page registers) which holds copies of a number of recently used address translation results.

It is also known to provide an associatively addressed slave or cache memory for holding copies of recently used data items or instructions. The slave may be fully associative or semi-associative, and may be accessed either by the virtual address or the real address.

Wood et al., "An in-cache address translation mechanism", 13th Annual International Symposium on Computer Architecture, 2nd June 1986, IEEE Computer Society Press, describes a virtually-tagged cache, and mentions the use of a translation lookaside buffer (TLB) to hold a number of recently used page table entries (PTEs) for translating virtual addresses. This paper also proposes that address translation can be accomplished by fetching PTEs from the cache itself, instead of from a TLB, and mentions that some machines employ a TLB in addition to caching page tables.

EP-A-0 310 444 describes a unified cache which has separate portions for holding data and translation data.

The object of the present invention is to provide an improved method of operating virtual memory system with a potentially more efficient address translation process compared with the prior art.

### Summary of the Invention

According to the invention there is provided a method of operating a virtual memory system as claimed in claim 1.

### Brief Description of the Drawings

Figure 1 is a block diagram of a computer system embodying a virtual memory system in accordance with the invention.

Figure 2 is a flow chart showing the steps in accessing a data item in the virtual memory system.

Figure 3 is a schematic diagram showing the address translation tables used in the virtual memory system.

Figure 4 is a block diagram of a slave or cache memory forming part of the system

### Description of an embodiment of the invention

One virtual memory system in accordance with the present invention will now be described with reference to the accompanying drawings.

### Computer System

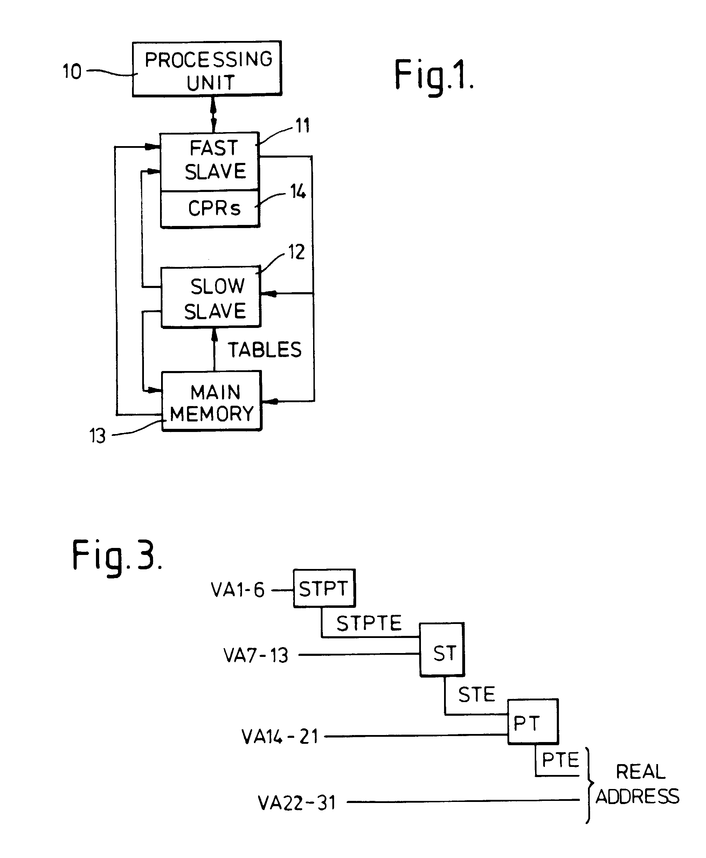

Figure 1 shows a computer system embodying the invention.

The computer system comprises a data processing unit 10, and a 3-level memory system comprising a fast slave 11, slow slave 12, and a main memory 13. A set of current page registers 14 (CPRs) is used to speed up address translation.

The fast slave is a fully associative, virtually addressed cache memory, holding 128 lines of code (i.e instructions) and 32 lines of data, each line being 32 bytes. The fast slave can be accessed in a single clock beat.

The slow slave is a 4-way set-associative, virtually addressed cache memory, holding 64 Kbytes of code, data and tables information. The slow slave can be accessed in two clock beats. The main memory is larger than the slaves, but has a considerably longer access time. It is addressed by a real address.

### Address translation

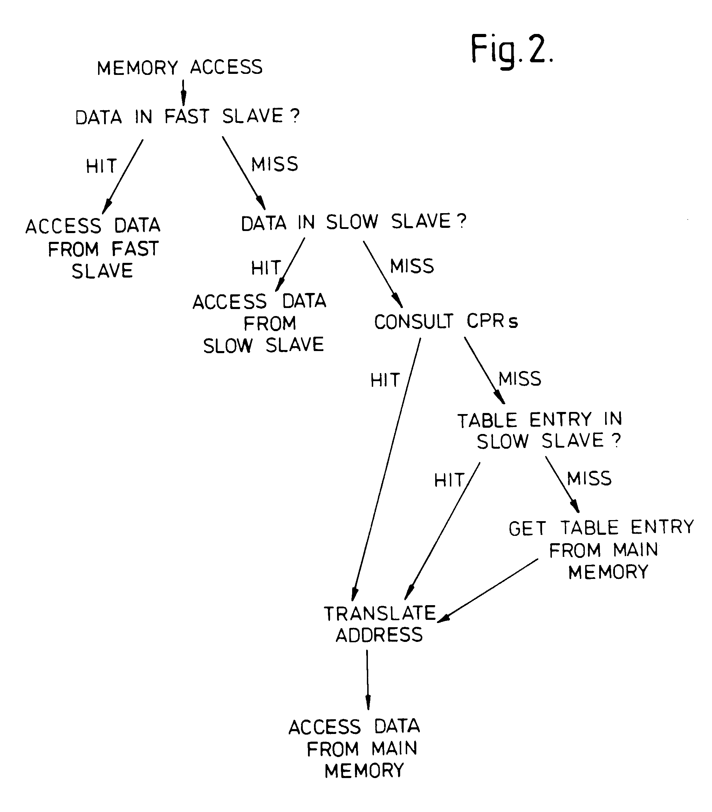

The processing unit addresses the memory system, by means of a virtual address VAO-31. Referring to figure 2, this shows the way in which code or data is accessed in the memory system.

First, a check is made to see whether the required code or data item is resident in the fast slave. If so (fast slave hit) the item can be accessed immediately in the fast slave, for reading or writing as required.

If the required item is not in the fast slave, a check is made to see whether the required item is resident in the slow slave. If so (slow slave hit), the item is accessed from the slow slave, and returned to the processing unit. It is also loaded into the fast slave so that it will be available for future accesses.

If the required item is not in either slave, the virtual address VA must be translated into the corresponding real address, for addressing the main memory. First, the CPRs 14 are consulted to determine whether the translation information has already been stored. If so (CPR hit) the real address is returned and the main store can then be accessed. If not (CPR miss) the processing unit must access the address translation tables.

The translation tables are held in the main memory, but copies of recently-used table entries are also held in the slow slave. Hence, when a CPR miss is detected, a check is made to see whether the required translation table entries are resident in the slow slave. If so, then the required translation table entries are read out of the slow slave and the real address is formed. The result of the translation is stored in the CPRs. If one or more of the required translation table entries is not resident in the slow slave, then the main memory is accessed, to obtain the necessary entry. This entry is then loaded into the slow slave, and the CPRs are updated.

As will be described in more detail later, the translation table entry is stored in the slow slave at a location determined by the corresponding fields of the virtual address to be translated.

When the address translation is complete, the real address is used to access the required item from the main memory. The item is then loaded into the fast slave (but not the slow slave), and is also returned to the processing unit.

When a data or code is loaded into the fast slave, it may be necessary to cast out an existing item from the fast slave to make room for the new item. The item cast out is loaded into the slow slave and is also, if necessary, written to the main memory. Thus, it should be noted that the only way in which a code or data item can get into to slow slave is when it is cast out of the fast slave; it cannot be loaded into the slow slave directly from the main memory. In contrast, table information is loaded directly from the main memory to the slow slave, but is not held in the fast slave.

### Translation tables

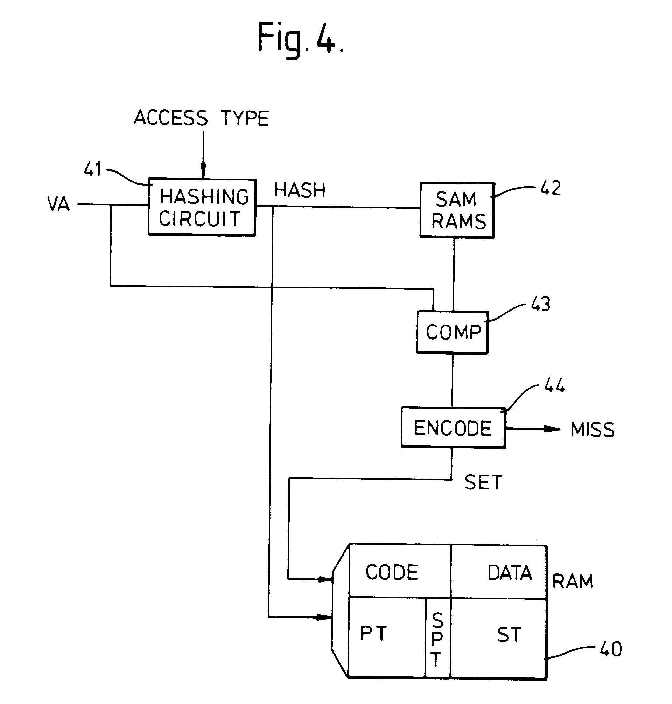

Referring to Figure 3, this shows the structure of the address translation tables.

The tables comprise a segment table page table (STPT) 31, a set of segment tables (ST) 32, and a set of page tables (PT) 33. The procedure for translating a virtual address VA to a read address using these tables is as follows:

Bits VA1-6 are used to index the STPT to read out a segment table page table entry STPTE. The STPTE is then used to select one of the segment tables ST, and the selected table is indexed by bits VA7-13, to read out a segment table entry STE. The STE is then used to select one of the page tables PT, and the selected table is indexed by bits VA14-21, to read out a page table entry PTE. Finally, the PTE is combined with bits VA22-31 to provide the real address RA.

### Slow slave

Referring now to Figure 4, this shows the slow slave 12 in more detail.

The slow slave comprises a RAM 40, which stores a total of 64K (65536) bytes of information, organised as follows:
a) 16K bytes of data. These are organised as 4 sets of 128 cells, each cell holding an 8 word block of data.
b) 16K bytes of code. These are organised as 4 sets of 128 cells, each cell holding an 8 word block of code.
c) 4K bytes of segment table page table entries (STPTE). These are organised as a single set of 128 cells, each cell holding 8 STPTEs.
d) 12K bytes of page table entries (PTE). These are organised as 3 sets of 128 cells, each cell holding 8 PTES.
e) 16K bytes of segment table entries (STE). These are organised as 4 sets of 128 cells, each cell holding 4 STEs.

The slow slave is accessed by the virtual address VA. The VA is applied to a hashing circuit 41 to form an 8-bit hash address HASH. The hashing algorithm used depends on the type of item being accessed (code, data, PTE, STE or STPTE).
a) In the case of code or data, the most significant bit of the hash address is set to 0 and the remaining bits are derived from bits 12, 13, 22-26 of the virtual address.
b) In the case of a PTE, the most significant bit of the hash address is set to 1, and the remaining bits are derived from bits 12-18 of the virtual address.
c) In the case of a STE, the most significant bit of the hash address is set to 1, and the remaining bits are derived from bits 5-11 of the virtual address.
d) In the case of a STPTE, the most significant bit of the hash address is set to 1, and other bits are derived from bits 0-3 of the virtual address.

The hash address is used to access a set of RAMS 42, referred to as semi associative RAMS (SAM RAMS). The outputs of the SAM RAMS are compared, in a comparison circuit 43, with the input virtual address VA. The result of this comparison is then encoded, in an encoder circuit 46, to produce a set address SET, indicating which set holds the required item. Alternatively, if no match is detected, the encoder produces a MISS signal, indicating that the required data item is not present in the RAM 40.

The set address and HASH address are used to select one cell within one set in the RAM 40. In the case of table information, one entry within the selected cell is selected as follows:
a) For page table information, virtual address bits 19, 20 and 21 are used to select one PTE within the cell.
b) For segment table information, virtual address bits 12 and 13 are used to select one STE within the cell.
c) For segment table page table information, virtual address bits 4, 5 and 6 are used to select one STPTE within the cell.

### Conclusion

In summary, it can be seen that the translation table information (STPTE, STE and PTE) is addressed in the slow slave RAM 40 using the field of the virtual address VA that would have been used to index the table. For example, bits 14-21 of the virtual address are used to address page table entries in the slow slave.

## Claims

1. A method of operating a virtual memory system comprising a main memory (13), a first virtually addressed slave store (11), a second virtually addressed slave store (12), and a set of current page registers (14), the second slave store being intermediate in size and speed between the first slave store and the main memory, the method comprising:
a) accessing the first slave store (11) to check whether a required data item having a specified virtual address is present in the first slave store,
b) when the required data item is present in the first slave store (11), accessing the required data item from the first slave store,
c) when the required data item is absent from the first slave store (11), accessing the second slave store (12) to check whether the required data item is present in the second slave store,
d) when the required data item is present in the second slave store, accessing the required data item from the second slave store,
e) when the required data item is absent from the second slave store (12), accessing the current page registers to determine whether address translation information relevant to the required data item is present in the current page registers,
f) when said address translation information is present in the current page registers, using said address translation information to translate said virtual address into a physical address and using said physical address to access the required data item from the main memory,
g) when said address translation information is absent from the current page registers, accessing the second slave store to determine whether said address translation information is present in the second slave store,
h) when said address translation information is present in the second slave store, using said address translation information from the second slave store to translate said virtual address into a physical address and using said physical address to access the required data item from the main memory,
i) when said address translation information is absent from the second slave store, accessing said address translation information from the main memory, using said address translation information to translate said virtual address into a physical address, using said physical address to access the required data item from the main memory, and loading said address translation information directly from the main memory into the second slave store, and
j) when a required data item is accessed from the main memory, loading that data item into the first slave store, and, if necessary, loading a data item cast out from the first slave store into the second slave store.

## Patentansprüche

1. Verfahren zum Betreiben einer virtuellen Speicheranordnung, mit einem Hauptspeicher (13), einem ersten virtuell adressierten Hilfsspeicher (11), einem zweiten virtuell adressierten Hilfsspeicher (12) und einem Satz von laufenden Seitenregistern (14), wobei der zweite Hilfsspeicher in Größe und Arbeitsgeschwindigkeit zwischen dem ersten Hilfsspeicher und dem Hauptspeicher liegt,
dadurch gekennzeichnet, daß
a) der erste Hilfsspeicher (11) zugegriffen wird, um zu prüfen, ob ein gesuchter Datenausdruck mit einer bestimmten virtuellen Adresse im ersten Hilfsspeicher vorhanden ist,
b) wenn der gesuchte Datenausdruck im ersten Hilfsspeicher (11) vorhanden ist, der gesuchte Datenausdruck aus dem ersten Hilfsspeicher zugegriffen wird,
c) wenn der gesuchte Datenausdruck im ersten Hilfsspeicher (11) fehlt, der zweite Hilfsspeicher (12) zugegriffen wird, um zu prüfen, ob der gesuchte Datenausdruck im zweiten Hilfsspeicher vorhanden ist,
d) wenn der gesuchte Datenausdruck im zweiten Hilfsspeicher vorhanden ist, der gesuchte Datenausdruck aus dem zweiten Hilfsspeicher zugegriffen wird,
e) wenn der gesuchte Datenausdruck im zweiten Hilfsspeicher (12) fehlt, die laufenden Seitenregister zugegriffen werden, um festzustellen, ob Adressenüersetzungsinformationen, die sich auf den gesuchten Datenausdruck beziehen, in den laufenden Seitenregistern vorhanden sind,
f) wenn die Adressenübersetzungsinformation in den laufenden Seitenregistern vorhanden ist, die Adressenübersetzungsinformation verwendet wird, um die virtuelle Adresse in eine physische Adresse zu übersetzen, und die physische Adresse verwendet wird, um den gesuchten Datenausdruck aus dem Hauptspeicher zuzugreifen,
g) wenn die Adressenübersetzungsinformation in den laufenden Seitenregistern fehlt, der zweite Hilfsspeicher zugegriffen wird, um zu bestimmen, ob die Adressenübersetzungsinformation im zweiten Hilfsspeicher vorhanden ist,
h) wenn die Adressenübersetzungsinformation im zweiten Hilfsspeicher vorhanden ist, die Adressenübersetzungsinformation aus dem zweiten Hilfsspeicher verwendet wird, um die virtuelle Adresse in eine physische Adresse zu übersetzen, und die physische Adresse verwendet wird, um den gesuchten Datenausdruck aus dem Hauptspeicher zuzugreifen,
i) wenn die Adressenübersetzungsinformation im zweiten Hilfsspeicher fehlt, die Adressenübersetzungsinformation aus dem Hauptspeicher zuzugreifen, die Adressenübersetzungsinformation zu verwenden, um die virtuelle Adresse in eine physische Adresse zu übersetzen, die physische Adresse verwendet wird, um den gesuchten Datenausdruck im Hauptspeicher zuzugreifen, und die Adressenübersetzungsinformation direkt von dem Hauptspeicher in den zweiten Hilfsspeicher zu laden, und
j) wenn ein gesuchter Datenausdruck aus dem Hauptspeicher zugegriffen wird, den Datenausdruck in den ersten Hilfsspeicher zu laden, und erforderlichenfalls einen Datenausdruck, der aus dem ersten Hilfsspeicher ausgeworfen wird, in den zweiten Hilfsspeicher zu laden.

## Revendications

1. Procédé pour faire fonctionner un système de mémoire virtuelle comprenant une mémoire centrale (13), une première mémoire esclave adressée virtuellement (11), une seconde mémoire esclave adressée virtuellement (12), et un ensemble de registres de pages actives (14), la seconde mémoire esclave ayant une capacité et une vitesse intermédiaires entre celles de la première mémoire esclave et de la mémoire centrale, le procédé consistant à :
a) accéder à la première mémoire esclave (11) pour contrôler si un élément de données voulu ayant une adresse virtuelle spécifiée est présente dans la première mémoire esclave,
b) quand l'élément de données voulu est présent dans la première mémoire esclave (11), accéder à l'élément de données voulu dans la première mémoire esclave,
c) quand l'élément de données voulu est absent de la première mémoire esclave (11), accéder à la seconde mémoire esclave (12) pour contrôler si l'élément de données voulu est présent dans la seconde mémoire esclave,
d) quand l'élément de données voulu est présent dans la seconde mémoire esclave, accéder à l'élément de données voulu dans la seconde mémoire esclave,
e) quand l'élément de données voulu est absent de la seconde mémoire esclave (12), accéder aux registres de pages actives pour déterminer si une information de traduction d'adresse concernant l'élément de données voulu est présente dans les registres de pages actives,
f) quand ladite information de traduction d'adresse est présente dans les registres de pages actives, utiliser ladite information de traduction d'adresse pour traduire ladite adresse virtuelle en une adresse physique et utiliser ladite adresse physique pour accéder à l'élément de données voulu dans la mémoire centrale,
g) quand ladite information de traduction d'adresse est absente des registres de pages actives, accéder à la seconde mémoire esclave pour déterminer si ladite information de traduction d'adresse est présente dans la seconde mémoire esclave,
h) quand ladite information de traduction d'adresse est présente dans la seconde mémoire esclave, utiliser ladite information de traduction d'adresse dans la seconde mémoire esclave pour traduire ladite adresse virtuelle en une adresse physique et utiliser ladite adresse physique pour accéder à l'élément de données voulu dans la mémoire centrale,
i) quand ladite information de traduction d'adresse est absente de la seconde mémoire esclave, accéder à ladite information de traduction d'adresse dans la mémoire centrale, utiliser ladite information de traduction d'adresse pour traduire ladite adresse virtuelle en une adresse physique, utiliser ladite adresse physique pour accéder à l'élément de données voulu dans la mémoire centrale, et charger ladite information de traduction d'adresse directement de la mémoire centrale dans la seconde mémoire esclave, et
j) quand on accède à un élément de données voulu dans la mémoire centrale, charger cet élément de données dans la première mémoire esclave et, si nécessaire, charger un élément de données expulsé de la première mémoire esclave dans la seconde mémoire esclave.
